# EUROPÄISCHE PATENTSCHRIFT

(11) **EP 0 584 619 B1**
(45) Veröffentlichungstag und Bekanntmachung des Hinweises auf die Patenterteilung: **19.02.1997**
(21) Anmeldenummer: 93112709.6
(22) Anmeldetag: 09.08.1993
(51) Int. Cl.: F16K 11/07

(54) **Dichtungsvorrichtung für Mehrwegeventile**
Multiway valve sealing arrangement
Dispositif d'étanchéité pour soupapes à voies multiples

(30) Priorität: 26.08.1992 DE 4228438
(43) Veröffentlichungstag der Anmeldung: 02.03.1994
(73) Patentinhaber: Festo KG, D-73734 Esslingen (DE)
(72) Erfinder: Stoll, Kurt, Dipl.-Ing., D-73732 Esslingen (DE)
(74) Vertreter: Abel, Martin, Dipl.-Ing.

(56) Entgegenhaltungen:
- EP-A- 0 475 070
- CH-A- 473 339
- DE-A- 2 420 483
- DE-A- 3 920 475
- FR-A- 2 234 811
- FR-A- 2 620 784
- GB-A- 931 956
- US-A- 3 017 901
- US-A- 4 240 467

## Beschreibung

Die Erfindung betrifft eine Dichtungsvorrichtung zur Abdichtung zwischen, dem Ventilgehäuse und einem in dem Ventilgehäuse axial verschieblichen Ventilschieber eines Mehrwegeventils, umfassend eine am Ventilgehäuse angeordnete radiale Haltevertiefung und einen in der Haltevertiefung aufgenommenen Dichtungsring, wobei vorgesehen ist, daß der Dichtungsring im montierten Zustand in der ventilgehäusefesten Haltevertiefung verankert ist und einen ringförmigen Dichtkörper aus Material mit gummielastischen Eigenschaften aufweist, der radial außen eine zur Abdichtung gegenüber der Haltevertiefung dienende umlaufende äußere Dichtpartie und radial innen eine zur Abdichtung gegenüber dem von ihm umschlossenen Ventilschieber dienende umlaufende innere Dichtpartie aufweist, wobei der Dichtkörper radial außerhalb der inneren Dichtpartie mit einem koaxial angeordneten Stütz- und Versteifungsring aus im Vergleich zum Dichtkörpermaterial härterem Material versehen ist und wobei sich die innere Dichtpartie an einem radial innerhalb des Stütz- und Versteifungsringes angeordneten, axial schwenkbeweglichen Teil des Dichtkörpers befindet, dessen innerhalb der Haltevertiefung liegender Abschnitt eine geringere Breite als der benachbarte Abschnitt der Haltevertiefung aufweist.

Mehrwegeventile besitzen häufig ein Ventilgehäuse mit einem Aufnahmeraum für einen kolbenartig mit runder Außenkontur ausgebildeten Ventilschieber, wobei zur Abdichtung zwischen dem Ventilgehäuse und dem Ventilschieber Dichtungsringe dienen, die den Ventilkolben konzentrisch umschließen und in Haltevertiefungen am Ventilgehäuse festgelegt sind.

Aus der DE-A-2 420 483 gehen in ein Ventilgehäuse eingesetzte Dichtungsringe der eingangs genannten Art hervor. Sie verfügen über einen Stütz- und Versteifungsring, der dafür sorgt, daß sie sicher in der Haltevertiefung des Mehrwegeventils verankert bleiben, selbst wenn infolge einer durch Anhaften am Ventilkolben verursachten Zugbeanspruchung größere Zugkräfte wirken. Darüberhinaus gewährleistet der Stütz- und Versteifungsring eine die roboterunterstützte Montage vereinfachende Gestalttreue. Somit ist es möglich, als Material für den Dichtkörper verhältnismäßig weichelastisches Material zu verwenden, das eine gute Dichtwirkung entfaltet. Daß die bei weichem Material verstärkt zu beobachtende Haftneigung die Wirksamkeit der bekannten Dichtringe nur wenig beeinträchtigt, rührt daher, daß die mit dem Ventilkolben zusammenarbeitende innere Dichtpartie an einem axial schwenkbeweglichen Teil des Dichtkörpers angeordnet ist. Diese wird bei der Anfahrbewegung des Ventilschiebers gleichzeitig ausgelenkt, wobei sie auf der Oberfläche des Ventilschiebers sanft ablaufen kann, so daß eine schonende Trennung einer eventuell vorhandenen Haftverbindung stattfindet.

Ein ähnlicher Dichtungsring geht aus der FR-A-2 234 811 hervor. Er unterscheidet sich von dem zuvor erläuterten im wesentlichen dadurch, daß aufgrund der Ausgestaltung des schwenkbeweglichen Teils die im Betrieb auftretenden Schwenkwinkel und dadurch auch die auftretenden Belastungen geringer sind. Allerdings besteht hier die Gefahr, daß sich der verschwenkbare Teil des Dichtkörpers bereits unter dem Druck des Mediums so weit seitlich verbiegt, daß der Dichtkontakt zum Ventilkolben gelöst wird und die Funktion beeinträchtigende Undichtigkeiten auftreten können.

Es ist somit die Aufgabe der vorliegenden Erfindung, eine Dichtungsvorrichtung der eingangs genannten Art zu schaffen, die im Zusammenhang mit dem Anhaften der Dichtpartie am abzudichtenden Ventilschieber die Beschädigungsgefahr verringert und eine sehr gute Dichtwirkung erzeugt.

Zur Lösung dieser Aufgabe ist vorgesehen, daß an den den Seitenwänden der Haltevertiefung zugewandten Außenflächen des die innere Dichtpartie aufweisenden schwenkbeweglichen Teils des Dichtkörpers eine Mehrzahl von über den Dichtkörperumfang verteilt angeordneten Erhebungen vorgesehen ist, die bei der Schwenkbewegung des schwenkbeweglichen Teils des Dichtkörpers zur Begrenzung dessen Schwenkweges mit den benachbarten Seitenwänden der Haltevertiefung zusammenwirken.

Ohne Beschädigungsgefahr erzielt man somit eine verbesserte Dichtwirkung. Der den verschwenkbaren Teil des Dichtkörpers flankierende Abschnitt der Haltevertiefung begrenzt den Schwenkwinkel und sorgt stets für eine stabile Lage. Gleichwohl ermöglicht das vorhandene Schwenkspiel des inneren Bereiches des Dichtkörpers ein schadloses Ablösen der Dichtpartie vom Ventilschieber im Falle des Anhaftens. Die anhaftende Dichtpartie wird vom Ventilschieber mitgenommen, so daß der zugeordnete schwenkbewegliche Teil des Dichtkörpers mit Schwung auf die das Schwenkspiel begrenzende Seitenwand der Haltevertiefung aufläuft und sich der Ventilschieber problemlos vom Haftgriff des Dichtkörpers befreien kann. Der Schwenkweg wird dabei von dem Feld insbesondere feiner Erhebungen an den Außenflächen des schwenkbeweglichen Teils des Dichtkörpers begrenzt, die darüberhinaus den vorteilhaften Effekt haben können, daß sie ein Anschmiegen und Festsaugen des Dichtkörpers an den Seitenwänden der Haltevertiefung unter dem Druck des Mediums verhindern. Der Dichtkörper kann sich also leicht wieder ablösen und in die Grundstellung zurückkehren.

Der erfindungsgemäße Dichtring läßt sich vor allem auch im Zusammenhang mit solchen Mehrwegeventilen verwenden, deren Ventilgehäuse im Bereich der Haltevertiefung quergeteilt ist oder bei denen sich die Haltevertiefungen zwischen axial aufeinanderfolgenden Ring- oder Hülsenkörpern befinden. Vorteilhaft ist ferner die Verwendung in Verbindung mit einem Mehrwegeventil mit einem längsgeteilten Ventilgehäuse, so daß bei voneinander entfernten Gehäuseteilen jeder dieser Gehäuseteile einen Umfangsabschnitt einer jeweiligen Haltevertiefung trägt. Hier wird also eine jeweilige Haltevertiefung beim Öffnen des Ventilgehäuses über einen Abschnitt ihres Umfangs, insbesondere einen hälftigen Abschnitt, geöffnet, so daß der Dichtungsring problemlos eingelegt werden kann.

Vorteilhafte Weiterbildungen der Erfindung gehen aus den Unteransprüchen hervor.

Zweckmäßigerweise ist die Anordnung so getroffen, daß der Dichtkörper im Querschnitt die Gestalt eines Keils oder Tropfens hat, der sich zum Ventilschieber hin verjüngt, wobei der Querschnitt des Dichtkörpers von der äußeren Dichtpartie allmählich bis zum Mittelabschnitt breiter werden kann, um sodann wiederum allmählich bis zur inneren Dichtpartie schmäler zu werden. Hierbei ist es besonders vorteilhaft, wenn die Steifigkeit des Materials des Stütz- und Versteifungsringes mindestens das fünffache derjenigen des Materials des Dichtkörpers beträgt.

Der Stütz- und Versteifungsring ist in den Dichtkörper zweckmäßigerweise wenigstens teilweise eingebettet, wobei er beispielsweise in einer ringförmigen, entlang ihres Umfangs nach außen hin offenen Aufnahme des Dichtkörpers einsitzen oder vollständig vom Material des Dichtkörpers umschlossen sein kann.

Die Lage des Stütz- und Versteifungsrings in radialer Richtung ist zweckmäßigerweise so gewählt, daß der elastische Deformationsweg vom Stütz- und Versteifungsring zum Ventilschieber im wesentlichen getrennt ist vom Deformationsweg vom Stütz- und Versteifungsring nach außen. Der Stütz- und Versteifungsring kann bewirken, daß der äußere Teil des Dichtkörpers ein anderes Schmiegeverhalten als der ventilschieberseitige Teil hat.

Ein Ausführungsbeispiel der erfindungsgemäßen Dichtungsvorrichtung ist in der beiliegenden Zeichnung dargestellt und wird nachfolgend erläutert. Es zeigen:

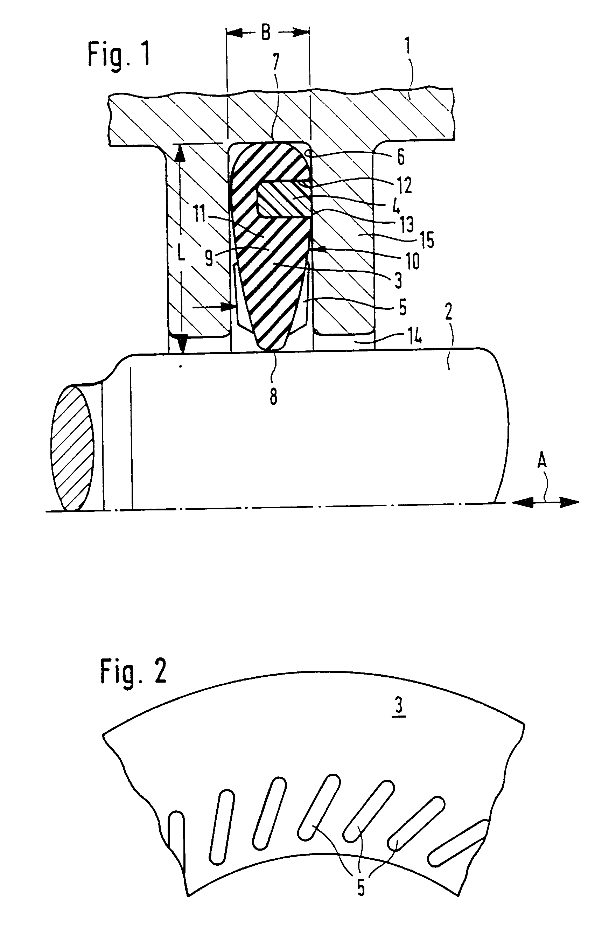

- Figur 1: Eine Ausführungsform der erfindungsgemäßen Dichtungsvorrichtung in einer Teildarstellung im Längsschnitt, und
- Figur 2: die Anordnung nach Figur 1 in einer Seitenansicht in schematischer Teildarstellung.

Der Dichtungsring wird gemäß der Erfindung in einem Mehrwegeventil gezeigt, das ein Ventilgehäuse 1 besitzt, in dessen Innerem ein Aufnahmeraum, wie an sich bekannt, vorhanden ist, in dem sich der Ventilschieber 2, der als Kolbenschieber ausgebildet ist, in axialer Richtung gemäß Pfeil A hin und her bewegt. Der Ventilschieber 2 trägt einen ringförmigen Dichtkörper 10 aus einem Material mit gummielastischen Eigenschaften, der ihn umschließt und der eine umlaufende, statisch wirkende äußere Dichtpartie 7, eine umlaufende, dynamisch wirkende innere Dichtpartie 8 und zwischen diesen einen Mittelabschnitt 9 besitzt. Die äußere Dichtpartie 7 dient zur Verankerung des Dichtungsringes und ist zu diesem Zweck in einer Haltenut oder -vertiefung 6 eingesetzt und hat überdies eine Dichtfunktion, indem sie verhindert, daß Druckmittel zwischen dem Dichtungsring und dem Ventilgehäuse axial hindurchströmt. Im allgemeinen besitzt sie einen am radial außenliegenden Rand vorgesehenen wulstartigen Dichtvorsprung, sie liegt am Grund der Vertiefung an. Die innere Dichtpartie 8 dient zur Abdichtung gegenüber dem von ihr umschlossenen Ventilschieber 2, an dem sie mit ihrem vorderen balligen Endteil anliegt.

Wie bekannt, trägt der Ventilschieber mehrere Dichtungsringe, er ist innerhalb des Gehäuses unter Einwirkung des Druckmittels hin und her verschieblich, um auf diese Weise die verschiedenen Ein- und Auslässe für das Druckmittel miteinander zu verbinden und dem Druckmittel unterschiedliche Strömungswege freizugeben bzw. zu verschließen.

All dies ist bekannt, weitere Erläuterungen sind deshalb nicht notwendig. Die innere Dichtpartie, die äußere Dichtpartie und der Mittelabschnitt sind konzentrisch, sie bilden gemeinsam den Dichtungsring, der den Ventilschieber umschließt. (Im übrigen ist in der Zeichnung jeweils nur die obere Hälfte des Schiebers und des Dichtungsringes sowie ein Teil des Gehäuses dargestellt.)

Erfindungsgemäß ist vorgesehen, daß im Dichtkörper 10 ein Stütz- und Versteifungsring 4 eingebettet ist, der aus einem härteren Material als das Material, aus dem der Dichtkörper besteht, hergestellt ist, er ist ebenfalls koaxial mit dem Dichtungsring und dem Ventilschieber angeordnet. Die Steifigkeit des Materials des Stütz- und Versteifungsrings 4 beträgt hierbei mindestens das Fünffache der Steifigkeit des Materials, aus dem der Dichtkörper hergestellt ist, zweckmäßigerweise ist der Stütz- und Versteifungsring aus Hartkunststoff hergestellt. Die Lage des Stütz- und Versteifungsrings in radialer Richtung ist so gewählt, daß der elastische Deformationsweg vom Stütz- und Versteifungsring zum Ventilkolben im wesentlichen getrennt ist vom Deformationsweg vom Stütz- und Versteifungsring nach außen. Der Stütz- und Versteifungsring bewirkt hierbei, daß der äußere Teil des Dichtkörpers 10 ein anderes Schmiegeverhalten gegenüber der Seitenwand der Haltenut oder -vertiefung des Ventilgehäuses als der ventilkolbenartige Teil hat.

Die Anordnung ist weiterhin so getroffen, daß der ventilschiebernahe Teil des Dichtkörpers 10 und hierbei dessen innere Dichtpartie 8 axial bzw. in Schieber-Längsrichtung gegenüber dem übrigen Teil des Dichtkörpers beweglich ist, so daß er eine Art Schwenkbewegung um eine im Mittelabschnitt liegende und etwa quer zur Ring-Längsachse verlaufende Schwenkachse ausführt. Damit wird dem Dichtungsring im Bereich der Ventilschiebernähe ein Schwenkspiel innerhalb der ihn aufnehmenden Haltenut oder -vertiefung ermöglicht, so daß die Oberfläche der Dichtpartie praktisch an der Oberfläche des Ventilschiebers abrollt, womit die starke Haftverbindung, insbesondere nach längerem Stillstand, schadlos abgelöst wird. Zugleich kann sich nunmehr der Ventilschieber trotz der anhaftenden Dichtpartie bewegen, so daß er bereits erheblichen Schwung hat, wenn die Schwenkbewegung der Dichtpartie dadurch unterbunden wird, daß die Dichtpartie auf die zugeordnete Vertiefungsflanke oder -seitenwand aufläuft. Mit dem bereits vorhandenen Schwung kann sich der Ventilschieber problemlos von dem Haftgriff des Dichtkörpers befreien, was bei seitlich starr eingespanntem Dichtkörper kaum möglich wäre. Hier wäre es u.U. sehr schwierig, das Ventil überhaupt in Gang zu bringen.

Wie aus der Zeichnung zu erkennen ist, hat der Dichtkörper 10 im Querschnitt ein längliches Profil und dabei vorzugsweise die Gestalt eines Keils oder Tropfens, der sich zum Ventilschieber 2 hin verjüngt, wobei zweckmäßigerweise der Querschnitt des Dichtkörpers 10 von der äußeren Dichtpartie 7 allmählich bis zum Mittelabschnitt 9 breiter wird, um sodann wiederum allmählich bis zur inneren Dichtpartie 8 schmäler zu werden. Vorzugsweise verhält sich, im Querschnitt des Dichtkörpers gesehen, die größte Breite B des Keils zur größten Länge dieses Keils wie 1 : 2,0-3,5. Es ist weiterhin aus der Zeichnung zu erkennen, daß der Dichtkörper an seinen den Seitenwänden der Haltenut oder -vertiefung des Ventilgehäuses zugewandten Außenflächenein Feld feiner, rippenartiger Erhebungen aufweist, die verhindern, daß der Dichtkörper 10 sich unter Fluiddruck voll an die Seitenwand der Haltenut oder -vertiefung 6 anschmiegt. Diese rippenartigen Erhebungen, dies sieht man besonders aus Fig. 2, können schräg zur Achse gerichtet sein und parallel zueinander verlaufen, wobei sie zweckmäßigerweise an der zwischen dem Stütz- und Versteifungsring 4 und dem Ventilschieber 2 enthaltenen Partie der Außenfläche des Dichtkörpers 10 vorgesehen sein können. Es ergibt sich somit, daß der schiebernahe Teil des Dichtungsringes eine axiale Beweglichkeit in der ihn aufnehmenden starren Haltenut oder -vertiefung besitzt, wobei die Wandschmiegung durch das oben genannte Feld feiner Erhebungen auf den den Seitenwänden der Haltenut oder -vertiefung zugewandten Flächen des Dichtringes vermieden wird. Die erfindungsgemäße Form und der erfindungsgemäße Aufbau des Dichtungsringes vermindert somit bei gegebener Ungenauigkeit die Vorspannung und deren Variationen, läßt größere Toleranzen als diejenigen der bekannten Dichtungsring-Bauarten (z.B. O-Ring) zu und verbessert damit die Aussichten auf eine qualitativ einwandfreie Ventilfunktion. Die Lebensdauer solcher Dichtungen steigt erfahrungsgemäß mit abnehmenden Schmiegungskräften. Auf Grund des geschilderten Verhaltens eignen sich diese Dichtungen besonders für den Einbau in längs der Schieberachse geteilte Ventilgehäuse, die im Bereich der Trennung eine Zentrierwirkung und eine Dichtwirkung brauchen, die auch kleine Variationen ausgleichen kann.

Bei der in der Zeichnung gezeigten Ausführungsform ist der Stütz- und Versteifungsring 4 in einer ringförmigen Aufnahme 12 des Dichtkörpers 10 eingelassen, die entlang ihres Umfanges nach außen hin offen ist, wobei zweckmäßigerweise die Außenfläche des in dieser ringförmigen Aufnahme 12 einsitzenden Stütz- und Versteifungsrings 4 bündig mit der sich an die Aufnahme 12 anschließenden Außenoberfläche des Dichtkörpers 10 ist. Es ist weiterhin zu erkennen, daß die umlaufende Öffnung 13 der Aufnahme 12 axial ausgerichtet ist, d. h. in Längsrichtung des Ventilschiebers oder auch, anders gesagt, parallel zu dessen Achse verläuft. Man kann den Stütz- oder Versteifungsring in den Dichtungsring einpressen, man kann ihn auch durch Verkleben oder durch Einschnappen mit diesem fest verbinden, ihn also fixieren. Der Versteifungsring kann auch vom Material des Dichtkörpers umspritzt sein. Es ist möglich, diesen Stütz- und Versteifungsring 4 hierbei vom Material des Dichtkörpers vollständig zu umschließen. Infolge der Nachgiebigkeit des eigentlichen Dichtkörpers (weiches Material) schmiegt sich die Dichtpartie 8 am Ventilschieber an dessen Umfangsfläche an, so daß bei einer axialen Verlagerung dieses Ventilschiebers die Tendenz besteht, den Dichtungsring als Ganzes über die Öffnung 14 zwischen dem Ventilschieber und der Seitenwand 15 der Haltenut oder -vertiefung 6 herauszuziehen. Hier wirkt insbesondere der Stütz- und Versteifungsring 4 entgegen, der im Dichtungsring eingebettet ist und aus härterem Material als der übrige Teil des Dichtkörpers besteht, so daß er sich nicht oder nur sehr wenig radial stauchen läßt. Dies hat zur Folge, daß der Dichtkörper 10 stets die korrekte Position in der Haltenut oder -vertiefung 6 erhält.

Der Stütz- und Versteifungsring 4 bewirkt auch, daß von der äußeren Dichtpartie 7 keine relevante statische Vorspannung auf die dynamisch dichtende Dichtpartie 8 übertragen wird. Die statische und die dynamische Dichtfunktion können somit ohne gegenseitige Beeinträchtigung ausgeübt werden.

Zusammenfassend kann also nochmals ausgeführt werden, daß der Dichtkörper 10 des Ausführungsbeispiels in dem radial zwischen dem Stütz- und Versteifungsring 4 und der inneren Dichtpartie 8 befindlichen Teil bzw. Abschnitt an beiden axial gerichteten Außenflächen jeweils eine Mehrzahl verteilt angeordneter Erhebungen 5 aufweist, die das Schwenkspiel dieses Teils des Dichtkörpers begrenzen und ein nachteiliges Anhaften des Dichtkörpers 10 an den Seitenwänden der Haltevertiefung 6 verhindern.

Der Dichtungsring hat im radialen Aufbau von außen nach innen zunächst eine statisch wirkende äußere Dichtpartie 7 aus z.B. nachgiebigem elastomerem Dichtkörpermaterial, woran sich der Stütz- und Versteifungsring 4 und darauf die innere Dichtpartie 8 anschließt. Der Stütz- und Versteifungsring 4 übernimmt u.a. eine Stützfunktion in Bezug auf die äußere Dichtpartie 7, indem er diese radial nach außen gegen den Grund der Haltevertiefung 7 preßt. Des weiteren schirmt er den sich radial innen an ihn anschließenden Teil des Dichtkörpers 10 gegen den Einfluß der statischen Dichtpartie ab, so daß er von deren Toleranzen weitgehend unabhängig ist.

Die Erhebungen 5 können insbesondere rippenartig ausgebildet sein. Verfügen sie über einen Schrägverlauf bezüglich der Radialrichtung des Dichtungsringes (aus Fig. 2 ersichtlich) bewirken sie im Vergleich zu exakt radial ausgerichteten rippenartigen Erhebungen einen besseren Widerstand gegen ein versehentliches Umstülpen des zur inneren Dichtpartie 8 auslaufenden lippenähnlichen Teils des Dichtkörpers 10.

## Patentansprüche

1. Dichtungsvorrichtung zur Abdichtung zwischen dem Ventilgehäuse (1) und einem in dem Ventilgehäuse (1) axial verschieblichen Ventilschieber (2) eines Mehrwegeventils, umfassend eine am Ventilgehäuse (1) angeordnete radiale Haltevertiefung (6) und einen in der Haltevertiefung (6) aufgenommenen Dichtungsring, wobei vorgesehen ist, daß der Dichtungsring im montierten Zustand in der ventilgehäusefesten Haltevertiefung (6) verankert ist und einen ringförmigen Dichtkörper (10) aus Material mit gummielastischen Eigenschaften aufweist, der radial außen eine zur Abdichtung gegenüber der Haltevertiefung (6) dienende umlaufende äußere Dichtpartie (7) und radial innen eine zur Abdichtung gegenüber dem von ihm umschlossenen Ventilschieber (2) dienende umlaufende innere Dichtpartie (8) aufweist, wobei der Dichtkörper (10) radial außerhalb der inneren Dichtpartie (8) mit einem koaxial angeordneten Stütz- und Versteifungsring (4) aus im Vergleich zum Dichtkörpermaterial härterem Material versehen ist und wobei sich die innere Dichtpartie (8) an einem radial innerhalb des Stütz- und Versteifungsringes (4) angeordneten, axial schwenkbeweglichen Teil des Dichtkörpers (10) befindet, dessen innerhalb der Haltevertiefung (6) liegender Abschnitt eine geringere Breite als der benachbarte Abschnitt der Haltevertiefung (6) aufweist, dadurch gekennzeichnet, daß an den den Seitenwänden der Haltevertiefung (6) zugewandten Außenflächen des die innere Dichtpartie (8) aufweisenden schwenkbeweglichen Teils des Dichtkörpers (10) eine Mehrzahl von über den Dichtkörperumfang verteilt angeordneten Erhebungen (5) vorgesehen ist, die bei der Schwenkbewegung des schwenkbeweglichen Teils des Dichtkörpers (10) zur Begrenzung dessen Schwenkweges mit den benachbarten Seitenwänden der Haltevertiefung (6) zusammenwirken.

2. Dichtungsvorrichtung nach Anspruch 1, dadurch gekennzeichnet, daß die an den Außenflächen des Dichtkörpers (10) vorgesehenen Erhebungen (5) rippenartig ausgebildet sind.

3. Dichtungsvorrichtung nach Anspruch 2, dadurch gekennzeichnet, daß die rippenartigen Erhebungen (5) schräg zur Radialrichtung des Dichtkörpers (10) ausgerichtet sind und insbesondere parallel zueinander verlaufen.

4. Dichtungsvorrichtung nach einem der Ansprüche 1 bis 3, dadurch gekennzeichnet, daß der Stütz- und Versteifungsring (4) ganz oder teilweise in den Dichtkörper (10) eingebettet ist.

5. Dichtungsvorrichtung nach einem der Ansprüche 1 bis 4, dadurch gekennzeichnet, daß der Dichtkörper (10) im Querschnitt die Gestalt eines Keils oder Tropfens hat, der sich zum Ventilschieber (2) hin verjüngt.

6. Dichtungsvorrichtung nach Anspruch 5, dadurch gekennzeichnet, daß der Querschnitt des Dichtkörpers (10) von der äußeren Dichtpartie (7) allmählich bis zum Mittelabschnitt breiter wird, um sodann wiederum allmählich bis zur inneren Dichtpartie (8) schmäler zu werden.

7. Dichtungsvorrichtung nach Anspruch 5 oder 6, dadurch gekenzeichnet, daß im Querschnitt des Dichtkörpers (10) die größte Breite (B) sich zur größten Länge (L) wie 1 : 2,0-3,5 verhält.

8. Dichtungsvorrichtung nach einem der Ansprüche 1 bis 7, dadurch gekennzeichnet, daß der Stütz- und Versteifungsring (4) vom Material des Dichtkörpers (10) vollständig umschlossen ist.

9. Dichtungsvorrichtung nach einem der Ansprüche 1 bis 7, dadurch gekennzeichnet, daß der Stütz- und Versteifungsring (4) in einer ringförmigen, entlang ihres Umfanges nach außen hin offenen Aufnahme (12) des Dichtkörpers (10) einsitzt.

10. Dichtungsvorrichtung nach Anspruch 9, dadurch gekennzeichnet, daß die Außenfläche des in der ringförmigen Aufnahme (12) einsitzenden Stütz- und Versteifungsrings (4) bündig mit der sich an die Aufnahme (12) anschließenden Außenoberfläche des Dichtkörpers (10) ist.

11. Dichtungsvorrichtung nach Anspruch 9 oder 10, dadurch gekennzeichnet, daß die umlaufende Öffnung (13) der ringförmigen Aufnahme (12) axial ausgerichtet ist.

12. Dichtungsvorrichtung nach einem der Ansprüche 1 bis 11, dadurch gekennzeichnet, daß der Stütz- und Versteifungsring (4) vom Dichtkörpermaterial umspritzt ist.

13. Dichtungsvorrichtung nach einem der Ansprüche 1 bis 12, dadurch gekennzeichnet, daß der Stütz- und Versteifungsring (4) aus Hartkunststoff oder Metall besteht.

## Claims

1. Sealing device for sealing between the valve housing (1) and a valve slide (2), axially moveable in the valve housing (1), of a multi-way valve, comprising a radial retaining recess (6) located on the valve housing (1) and a seal ring accommodated in the retaining recess (6), wherein it is provided that the seal ring in the assembled state is anchored in the retaining recess (6) fixed to the valve housing and has an annular sealing body (10) of material with rubber-elastic properties, which has on the radial outside an all-round external seal section (7) for sealing relative to the retaining recess (6), and on the radial inside an all-round internal seal section (8) providing sealing against the valve slide (2) which it encompasses, wherein the sealing body (10) is provided on the radial outside of the inner seal section (8) with a coaxially-mounted support and reinforcing ring (4) of material which is harder than that of the sealing body, and wherein the inner seal section (8) is located on a part of the sealing body (10) arranged radially within the support and reinforcing ring (4) and having axial swivel movement, and with its section lying within the retaining recess (6) having a smaller width than the adjacent section of the retaining recess (6), characterized in that, on the outer faces of the swivelling part of the sealing body (10) having the inner seal section (8) and facing the side walls of the retaining recess (6), a multiplicity of elevations (5) distributed over the circumference of the sealing body are provided, and act in conjunction with the adjacent side walls of the retaining recess (6) to limit the swivel travel of the swivelling part of the sealing body (10) in the course of its swivel movement.

2. Sealing device according to claim 1, characterized in that the elevations provided on the outer faces of the sealing body (10) are of rib-like design.

3. Sealing device according to claim 2, characterized in that the rib-like elevations (5) are aligned at an angle to the radial direction of the sealing body (10) and run in particular parallel to one another.

4. Sealing device according to any of claims 1 to 3, characterized in that the support and reinforcing ring (4) is partially or wholly embedded in the sealing body (10).

5. Sealing device according to any of claims 1 to 4, characterized in that the cross-section of the sealing body (10) has the shape of a wedge or drop, tapering towards the valve slide (2).

6. Sealing device according to claim 5, characterized in that the cross-section of the sealing body (10) gradually widens from the outer seal section (7) towards the centre section, and then gradually narrows towards the inner seal section (8).

7. Sealing device according to claim 5 or 6, characterized in that, in the cross-section of the sealing body (10), the ratio between the maximum width and the maximum length is 1 : 2.0 - 3.5.

8. Sealing device according to any of claims 1 to 7, characterized in that the support and reinforcing ring (4) is completely surrounded by the material of the sealing body (10).

9. Sealing device according to any of claims 1 to 7, characterized in that the support and reinforcing ring (4) rests in an annular housing (12) of the sealing body (10) which is open to the outside along its periphery.

10. Sealing device according to claim 9, characterized in that the outer face of the support and reinforcing ring (4) resting in the annular housing (12) is flush with the outer surface of the sealing body (11) adjoining the recess (12).

11. Sealing device according to claim 9 or 10, characterized in that the opening (13) running round the annular housing (12) is axially aligned.

12. Sealing device according to any of claims 1 to 11, characterized in that the support and reinforcing ring (4) is sheathed in sealing body material.

13. Sealing device according to any of claims 1 to 12, characterized in that the support and reinforcing ring (4) is made of rigid plastic or metal.

## Revendications

1. Dispositif d'étanchéité pour assurer l'étanchéité entre le corps de vanne (1) et un tiroir de vanne (2), mobile axialement dans le corps de vanne (1), d'un distributeur, comprenant un évidement de retenue (6) disposé radialement sur le corps de vanne (1) et une bague d'étanchéité logée dans l'évidement de retenue (6), dans lequel il est prévu que la bague d'étanchéité est ancrée à l'état monté dans l'évidement de retenue (6) lié au corps de vanne et présente un corps d'étanchéité (10) annulaire composé d'une matière ayant des propriétés élastiques, ledit corps présentant radialement à l'extérieur une partie d'étanchéité (7) extérieure circulaire servant à assurer l'étanchéité vis-à-vis de l'évidement de retenue (6) et radialement à l'intérieur une partie d'étanchéité (8) intérieure circulaire servant à assurer l'étanchéité vis-à-vis du tiroir de vanne (2) entouré par ce corps, ledit corps d'étanchéité (10) étant muni radialement, à l'extérieur de la partie d'étanchéité (8) intérieure, d'une bague de renforcement et d'appui (4) composée d'un matériau plus dur que le matériau du corps d'étanchéité, et la partie d'étanchéité (8) intérieure se trouvant sur une partie du corps d'étanchéité (10) pivotante axialement, disposée radialement à l'intérieur de la bague de renforcement et d'appui (4), et dont le segment se trouvant à l'intérieur de l'évidement de retenue (6) présente une largeur inférieure au segment voisin de l'évidement de retenue (6), caractérisé en ce qu'une pluralité de protubérances (5) réparties sur le pourtour du corps d'étanchéité est prévue sur les faces extérieures, orientées vers les parois latérales de l'évidement de maintien (6), de la partie du corps d'étanchéité (10) pivotante et présentant la partie d'étanchéité (8) intérieure, lesdites protubérances coopérant avec les parois latérales voisines de l'évidement de maintien (6), lors du pivotement de la partie pivotante du corps d'étanchéité (10), pour limiter sa course de pivotement.

2. Dispositif d'étanchéité suivant la revendication 1, caractérisé en ce que les protubérances (5) prévues sur les faces extérieures du corps d'étanchéité (10) sont réalisées sous la forme de nervures.

3. Dispositif d'étanchéité suivant la revendication 2, caractérisé en ce que les protubérances (5) en forme de nervures sont orientées obliquement par rapport à la direction radiale du corps d'étanchéité (10), et sont en particulier parallèles l'une à l'autre.

4. Dispositif d'étanchéité suivant l'une des revendications 1 à 3, caractérisé en ce que la bague de renforcement et d'appui (4) est totalement ou partiellement intégrée dans le corps d'étanchéité (10).

5. Dispositif d'étanchéité suivant l'une des revendications 1 à 4, caractérisé en ce que le corps d'étanchéité (10) a en section la forme d'un coin ou d'une goutte qui se rétrécit en direction du tiroir de vanne (2).

6. Dispositif d'étanchéité suivant la revendication 5, caractérisé en ce que la section du corps d'étanchéité (10) devient progressivement plus large en partant de la partie d'étanchéité (7) extérieure jusqu'au segment central, pour redevenir progressivement plus étroite jusqu'à la partie d'étanchéité (8) intérieure.

7. Dispositif d'étanchéité suivant la revendication 5 ou 6, caractérisé en ce que, dans la section du corps d'étanchéité (10), la plus grande largeur (B) a un rapport de 1:2,0 à 3,5 par rapport à la plus grande longueur (L).

8. Dispositif d'étanchéité suivant l'une des revendications 1 à 7, caractérisé en ce que la bague de renforcement et d'appui (4) est complètement entourée par le matériau du corps d'étanchéité (10).

9. Dispositif d'étanchéité suivant l'une des revendications 1 à 7, caractérisé en ce que la bague de renforcement et d'appui (4) est logée dans un logement (12) du corps d'étanchéité (10) annulaire, s'ouvrant vers l'extérieur le long de son pourtour.

10. Dispositif d'étanchéité suivant la revendication 9, caractérisé en ce que la face extérieure de la bague de renforcement et d'appui (4) logée dans le logement annulaire (12) affleure avec la surface extérieure du corps d'étanchéité (10) se raccordant au logement (12).

11. Dispositif d'étanchéité suivant la revendication 9 ou 10, caractérisé en ce que l'ouverture (13) circulaire du logement annulaire (12) est orientée axialement.

12. Dispositif d'étanchéité suivant l'une des revendications 1 à 11, caractérisé en ce que la bague de renforcement et d'appui (4) est recouverte par surmoulage par le matériau du corps d'étanchéité.

13. Dispositif d'étanchéité suivant l'une des revendications 1 à 12, caractérisé en ce que la bague de renforcement et d'appui (4) est composée de matière plastique dure ou de métal.
